# EUROPÄISCHE PATENTSCHRIFT

(11) **EP 2 984 253 B1**
(45) Veröffentlichungstag und Bekanntmachung des Hinweises auf die Patenterteilung: **30.05.2018**
(21) Anmeldenummer: 14707133.6
(22) Anmeldetag: 27.02.2014
(51) Int. Cl.: E04G 21/04, B66C 23/78, B66C 23/80

(54) **FAHRBARE BETONPUMPE MIT VERTEILERMAST UND ABSTÜTZVORRICHTUNG**
MOBILE CONCRETE PUMP WITH DISTRIBUTING BOOM AND SUPPORT DEVICE
POMPE À BÉTON MOBILE POURVUE D'UN MÂT DE DISTRIBUTION ET D'UN DISPOSITIF STABILISATEUR

(30) Priorität: 11.04.2013 DE 102013206366
(43) Veröffentlichungstag der Anmeldung: 17.02.2016
(73) Patentinhaber: Putzmeister Engineering GmbH, 72631 Aichtal (DE)
(72) Erfinder: FÜGEL, Dietmar, 72649 Wolfschlugen (DE); BENZ, Andreas, 73240 Wendlingen (DE)
(74) Vertreter: Pfiz, Thomas
(86) Internationale Anmeldenummer: PCT/EP2014/053777
(87) Internationale Veröffentlichungsnummer: WO 2014/166670

(56) Entgegenhaltungen:
- CN-A- 102 442 281
- CN-U- 202 573 937
- DE-A1-102007 060 526
- US-B1- 7 328 810

## Beschreibung

Die Erfindung bezieht sich auf eine fahrbare Betonpumpe gemäß dem Oberbegriff des Anspruchs 1. Autobetonpumpen dieser Art sind bekannt (DE-100 32 622 A1). Die Tragstruktur hat dort die Aufgabe, das Gewicht und das Lastmoment des Verteilermastes über die Abstützvorrichtung in den Untergrund einzuleiten. Üblicherweise umfasst die Abstützvorrichtung vier an der Tragstruktur angelenkte Stützbeine, die über Hydraulikzylinder am Untergrund abgestützt werden können. Die Schnittstelle zwischen dem Verteilermast und der Abstützvorrichtung bildet der Kessel als zentraler Bestandteil des Mastbocks, an dem der Drehkopf des Verteilermasts über ein Drehlager und einen Antriebsmechanismus angebracht ist. Der Kessel ist ein hoch belastetes Bauteil, das die Lasten des Verteilermasts aufnehmen und an die Stützbeine weitergeben muss. Üblicherweise ist der Kessel um die Drehachse des Verteilermasts zylindrisch oder polygonal ausgeführt. Alle bekannten Kessel haben gemeinsam die Eigenschaft, dass sich der Querschnitt über ihre Höhe nicht verändert. Es hat sich gezeigt, dass diese Gestaltung mit unveränderlichem Querschnitt über die Höhe nicht belastungsgerecht konstruiert ist.

CN 102 442 281 A offenbart eine fahrbare Betonpumpe gemäß dem Oberbegriff des Anspruchs 1.

Ausgehend hiervon liegt der Erfindung die Aufgabe zugrunde, die bekannte fahrbare Betonpumpe im Bereich ihrer Tragstruktur leichter, platzsparender und dennoch belastungsgerecht zu gestalten.

Zur Lösung dieser Aufgabe werden die im Patentanspruch 1 angegebenen Merkmale vorgeschlagen. Vorteilhafte Ausgestaltungen und Weiterbildungen der Erfindung ergeben sich aus den abhängigen Ansprüchen.

Die erfindungsgemäße Lösung geht von dem Gedanken aus, dass sich eine leichte und dennoch belastungsgerechte Konstruktion ergibt, wenn sich der Kessel von oben nach unten im Querschnitt verjüngt. Dementsprechend wird gemäß der Erfindung vorgeschlagen, dass der Kessel mit seiner im Querschnitt von oben nach unten kegel- oder pyramidenstumpfartig verjüngenden Kesselwand in die Tragstruktur eingreift und in diese starr eingefügt ist.

Die erfindungsgemäße Konstruktion spart unnötigen Materialeinsatz und senkt damit das Bauteilgewicht und damit auch das Maschinengewicht. Die sich von oben nach unten verjüngende Form schafft Raum zwischen der Abstützkonstruktion und dem Mastbock, in welchem die notwendigen Installationen insbesondere bei Tragstrukturen mit vier Schwenkbeinen raumsparend untergebracht werden können. Vorteilhafterweise lassen sich im gewonnenen Bauraum Teleskopzylinder für Teleskopschwenkbeine unterbringen, die bislang aufwändig, teuer und nur schwer zugänglich im Inneren der Teleskopbeine untergebracht werden mussten. Dieser Raumgewinn ist vor allem bei Großmaschinen von Bedeutung.

Eine bevorzugte Ausgestaltung der Erfindung sieht vor, dass der Kessel eine vertikale Durchgangsöffnung für den Durchtritt einer Betonförderleitung aufweist.

Eine weitere vorteilhafte Ausgestaltung der Erfindung sieht vor, dass am Kessel zur Tragstruktur gehörende Lagerarme angeschweißt sind, die im Abstand von der Kesselwand angeordnete Lageraugen aufweisen, an denen jeweils eines der Stützbeine um eine vertikale Achse schwenkbar gelagert ist.

Eine weitere Verringerung des Materialeinsatzes kann dadurch erzielt werden, dass die Kesselwand einen Kegelstumpf oder einen Pyramidenstumpf mit einer nach unten hin offenen, in Fahrtrichtung der Betonpumpe schräg ansteigenden Stumpffläche bildet. Der Kessel kann dabei mit seiner schrägen Stumpffläche auf einem in Fahrtrichtung schräg ansteigenden Stützrahmen der Tragstruktur abgestützt werden.

Im Folgenden wird die Erfindung anhand eines in der Zeichnung in schematischer Weise dargestellten Ausführungsbeispiels näher erläutert. Es zeigen
- Fig. 1a: und b eine Seitenansicht und eine Draufsicht einer Autobetonpumpe mit einem Verteilermast und einer Ausstellvorrichtung;
- Fig. 2: und 3 je eine schaubildliche Darstellung der Tragstruktur der Autobetonpumpe nach Fig. 1a und b mit einem Stützbein der Abstützvorrichtung und dem im Mastbock der Tragstruktur angeordneten Kessel.

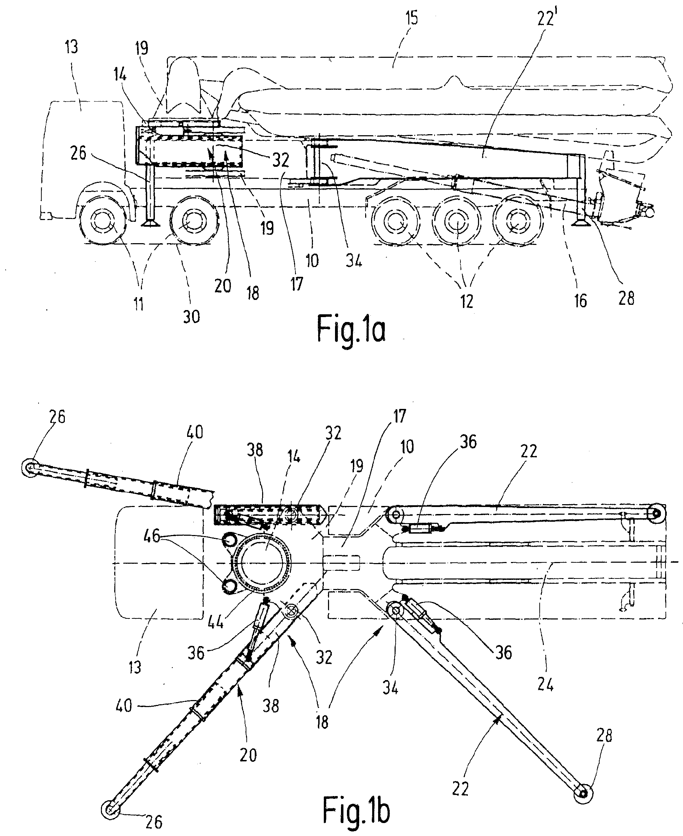

Die in Fig. 1a und b gezeigte Autobetonpumpe besteht im Wesentlichen aus einem mehrachsigen Fahrgestell 10 mit zwei Vorderachsen 11 und drei Hinterachsen 12, mit einem Führerhaus 13, einem an einem vorderachsnahen Mastbock 14 mittels eines Drehkopfs 19 um eine vertikale Achse drehbar gelagerten Betonverteilermast 15, mit einer im Abstand vom Mastbock 14 auf dem Fahrgestell 10 montierten Pumpanordnung 16 sowie eine auf das Fahrgestell 10 aufgesetzte Tragstruktur 17 für eine Abstützvorrichtung 18. Die Abstützvorrichtung 18 umfasst zwei vordere Stützbeine 20 und zwei rückwärtige Stützbeine 22,22', die an der Tragstruktur 17 angelenkt sind. Die Stützbeine sind in der Transportstellung eingezogen und parallel zur Fahrzeuglängsachse 24 ausgerichtet, während sie in der Abstützstellung schräg nach vorne bzw. hinten über das Fahrgestell 10 überstehen und mit ihren Fußteilen 26,28 auf dem Untergrund 30 abgestützt sind. Die vorderen Stützbeine 20 sind dabei um ihre vertikalen Schwenkachsen 32 und die rückwärtigen Stützbeine 22,22' um ihre vertikalen Schwenkachsen 34 zwischen der Transportstellung und der Abstützstellung unter der Einwirkung je eines Ausstellzylinders 36 gegenüber der Tragstruktur 17 verschwenkbar. Grundsätzlich ist es bei einem abgewandelten Ausführungsbeispiel auch möglich, dass die einander benachbarten vorderen und rückwärtigen Stützbeine 20,22,22' über einen gemeinsamen Antrieb verschwenkt werden. Zusätzlich sind die vorderen Stützbeine 20 als Teleskopausleger ausgebildet. Wie insbesondere aus Fig. 1b zu ersehen ist, umfassen sie jeweils einen um die vertikale Schwenkachse 32 gegenüber der Tragstruktur 17 verschwenkbaren Auslegerkasten 38 und ein aus drei Teleskoprohren bestehendes Teleskopteil 40 auf.

Zentraler Bestandteil des Mastbocks 14 ist der Kessel 42, der die Schnittstelle zwischen dem Verteilermast 15 und der Abstützvorrichtung 18 bildet. Der Drehkopf 19 des Verteilermasts ist von oben her auf den Kessel 42 aufgesetzt und dort um eine vertikale Achse drehbar gelagert. Der Antrieb erfolgt über einen am Drehkopf 19 starr angeordneten und über ein Wälzlager am Kessel drehbar gelagerten Zahnring 44 mit Hilfe zweier hydraulischer oder elektrischer Antriebsmotoren 45, die mit einem Antriebsritzel 57 in den Zahnring 44 eingreifen. Die Antriebsmotoren 45 sind an kesselfesten Laschen 46 des Mastbocks angeordnet. Der Kessel weist eine vertikale Durchgangsöffnung 43 für den Durchtritt einer nicht dargestellten Betonförderleitung auf. Da der Kessel ein Vertikallager für den Verteilermast 15 bildet, nimmt er die Belastung über seine Höhe auf. Die Belastung ist am oberen Ende nahe des Drehlagers 48 maximal und nimmt nach unten hin ab.

Die Form des Kessels 42 ist dem Belastungsverlauf dadurch angepasst, dass sein Querschnitt sich von oben nach unten konisch verjüngt. Diese Konstruktion spart unnötigen Materialeinsatz und senkt das Bauteilgewicht und damit auch das Maschinengewicht. Die konische Form schafft außerdem Raum zwischen den Stützbeinen 20 und dem Mastbock 14 zur Unterbringung der notwendigen Installationen. Insbesondere lassen sich im gewonnenen Bauraum die Teleskopzylinder 62 für die teleskopierbaren Stützbeine 20 unterbringen, die bisher nur schwer zugänglich im Inneren der Teleskopbeine untergebracht werden konnten.

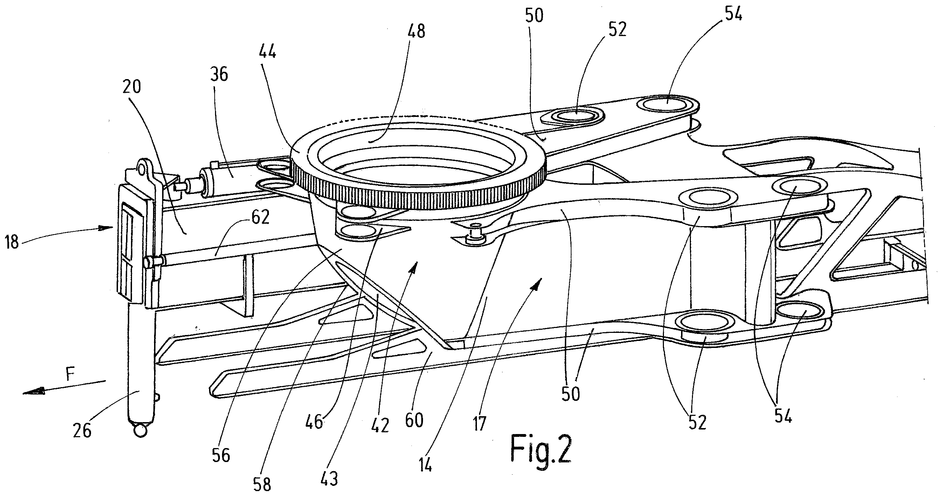

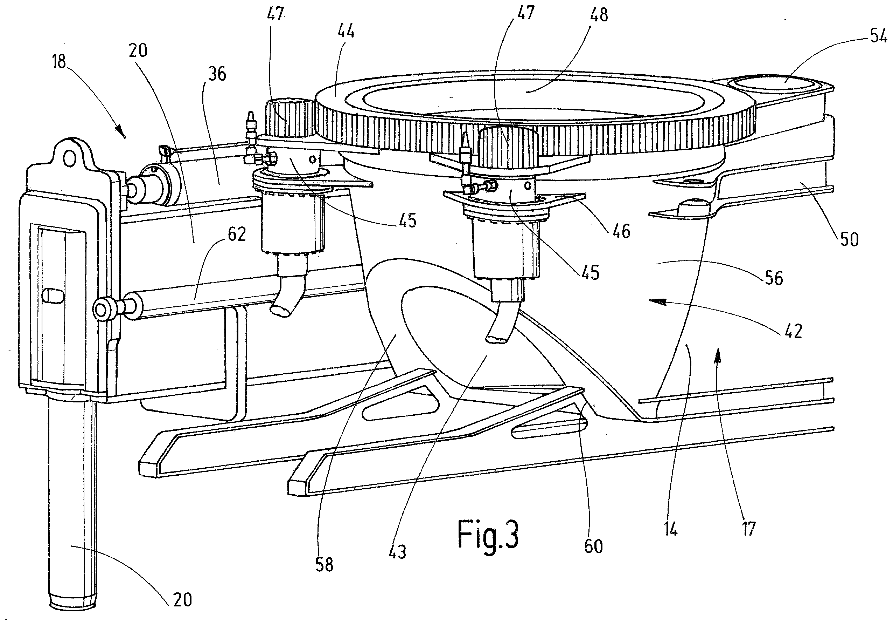

Wie aus Fig. 2 und 3 zu ersehen ist, sind am Kessel 42 außerdem die zur Tragstruktur 17 gehörenden Lagerarme 50 angeschweißt, die im Abstand von der Kesselwand angeordnete Lageraugen 52,54 aufweisen, an denen jeweils eines der Stützbeine 20,22,22' um eine vertikale Achse schwenkbar gelagert ist.

Wie aus Fig. 2 und 3 zu ersehen ist, besteht eine weitere Besonderheit der Erfindung darin, dass die einen Kegelstumpf bildende Kesselwand 56 eine nach unten offene, in Fahrtrichtung der Betonpumpe schräg ansteigende Stumpffläche 58 bildet, die auf einem in Fahrtrichtung schräg ansteigenden Stützrahmen 60 der Tragstruktur 17 abgestützt ist. Dadurch ergibt sich eine zusätzliche Gewichtseinsparung.

Zusammenfassend ist folgendes festzuhalten: Die Erfindung bezieht sich auf eine fahrbare Betonpumpe gemäß Anspruch 1. Der Kessel 42 greift mit einer sich im Querschnitt von oben nach unten kegel- oder pyramidenstumpfartig verjüngenden Kesselwand 56 in die Tragstruktur 17 ein und ist in diese starr eingefügt, vorzugsweise eingeschweißt.

### Bezugszeichenliste:

- 10: Fahrgestell
- 11: Vorderachse
- 12: Hinterachse
- 13: Führerhaus
- 14: Mastbock
- 15: Betonverteilermast
- 16: Pumpanordnung
- 17: Tragstruktur
- 18: Abstützvorrichtung
- 19: Drehkopf
- 20: vordere Stützbeine
- 22,22': rückwärtige Stützbeine
- 24: Fahrzeuglängsachse
- 26,28: Fußteile
- 30: Untergrund
- 32,34: vertikale Schwenkachsen
- 36: Ausstellzylinder
- 38: Auslegerkasten
- 40: Teleskopteil
- 42: Kessel
- 43: Durchgangsöffnung
- 44: Zahring
- 45: Antriebsmotor
- 46: Laschen
- 47: Antriebsritzel
- 48: Drehlager
- 50: Lagerarme
- 52,54: Lageraugen
- 56: Kesselwand
- 58: Stumpffläche
- 60: Stützrahmen
- 62: Teleskopzylinder
- F: Fahrtrichtung

## Patentansprüche

1. Fahrbare Betonpumpe mit einer auf ein Fahrgestell (10) eines LKW-Chassis aufgesetzten Tragstruktur (17), welche eine Abstützvorrichtung (18) und einen Verteilermast (15) bildende Funktionseinheiten aufweist, wobei die den Verteilermast (15) bildende Funktionseinheit einen an einem tragstrukturfesten Mastbock (14) um eine vertikale Achse drehbar gelagerten Drehkopf (19) aufweist, und der Mastbock (14) einen in die Tragstruktur (17) eingreifenden, als Drehlager (48) für den Drehkopf (19) ausgerüsteten Kessel (42) umfasst und wobei die die Abstützvorrichtung (18) bildenden Funktionseinheiten je ein in einem tragstrukturfesten Lager (52,54) schwenkbar und/oder teleskopierbar gelagertes Stützbein (20,22,22') umfassen, **dadurch gekennzeichnet, dass** der Kessel (42) mit einer sich im Querschnitt von oben nach unten kegel- oder pyramidenstumpfförmig verjüngenden Kesselwand (56) in die Tragstruktur (17) eingreift und in diese starr eingefügt ist.

2. Betonpumpe nach Anspruch 1, **dadurch gekennzeichnet, dass** der Kessel (42) eine vertikale Durchgangsöffnung (43) für den Durchtritt einer Betonförderleitung aufweist.

3. Betonpumpe nach Anspruch 1 oder 2, **dadurch gekennzeichnet, dass** am Kessel (42) zur Tragstruktur (17) gehörende Lagerarme (50) angeschweißt sind, die im Abstand von der Kesselwand (56) angeordnete Lageraugen (52,54) aufweisen, an denen jeweils eines der Stützbeine (20,22,22') um eine vertikale Achse schwenkbar gelagert ist.

4. Betonpumpe nach einem der Ansprüche 1 bis 3, **dadurch gekennzeichnet, dass** die Kesselwand (56) einen Kegelstumpf oder einen Pyramidenstumpf mit einer nach unten hin offenen, in Fahrtrichtung (F) der Betonpumpe schräg ansteigenden Stumpffläche (58) bildet.

5. Betonpumpe nach Anspruch 4, **dadurch gekennzeichnet, dass** der Kessel (42) mit seiner schrägen Stumpffläche (58) auf einem in Fahrtrichtung schräg ansteigenden Stützrahmen (60) der Tragstruktur (17) abgestützt ist.

6. Betonpumpe nach einem der Ansprüche 1 bis 5, **dadurch gekennzeichnet, dass** die vorderen Stützbeine (20) aus mehreren Teleskopgliedern (40) zusammengesetzt sind, die mittels eines auf der der konischen Kesselwand (56) zugewandten Seite außerhalb der Stützbeine (20) angeordneten hydraulisch betätigbaren Teleskopzylinders (62) teleskopierbar sind.

## Claims

1. A mobile concrete pump with a support structure (17) being placed on a vehicle frame (10) of a truck chassis and comprising functional units which form a support device (18) and a distributing boom (15), wherein the functional unit which forms the distributing boom (15) has a rotary head (19) mounted on a boom pedestal (14) in a rotatable manner about a vertical axis, said boom pedestal being secured to the support structure, and the boom pedestal (14) comprises a shell (42) which engages in the support structure (17) and is provided as a rotary bearing (48) for the rotary head (19), and wherein the functional units forming the support device (18) have a respective support leg (20, 22, 22') mounted in a bearing (52, 54) in a pivotable and/or telescopable manner, said bearing being secured to the support structure, **characterized in that** the shell (42), with a shell wall (56) which tapers in cross section from top to bottom in the shape of a truncated cone or truncated pyramid, engages in the support structure (17) and is rigidly inserted therein.

2. The concrete pump as claimed in claim 1, **characterized in that** the shell (42) has a vertical through-opening (43) for the passage of a concrete conveying line.

3. The concrete pump as claimed in claim 1 or 2, **characterized in that** bearing arms (50) forming part of the support structure (17) are welded onto the shell (42), said bearing arms having bearing eyes (52, 54) arranged spaced apart from the shell wall (56), in each case one of the support legs (20, 22, 22') being pivotably mounted thereon about a vertical axis.

4. The concrete pump as claimed in one of claims 1 to 3, **characterized in that** the shell wall (56) forms a truncated cone or a truncated pyramid with an abutment surface (58) which is open downwardly and rises obliquely in the direction of travel (F) of the concrete pump.

5. The concrete pump as claimed in claim 4, **characterized in that** the shell (42) is supported by its oblique abutment surface (58) on a support frame (60) of the support structure (17) rising obliquely in the direction of travel.

6. The concrete pump as claimed in one of claims 1 to 5, **characterized in that** the front support legs (20) are made up of a plurality of telescopic members (40) which are able to be telescoped by means of a telescopic cylinder (62) which is able to be actuated hydraulically and which is arranged on the side facing the conical shell wall (56) outside the support legs (20).

## Revendications

1. Pompe à béton déplaçable comprenant une structure porteuse (17) posée sur un train de roulement (10) du châssis d'un véhicule poids-lourd, qui présente des unités fonctionnelles formant un dispositif de support (18) et un mât de distribution (15), l'unité fonctionnelle formant le mât de distribution (15) présentant une tête rotative (19) supportée de manière à pouvoir tourner autour d'un axe de rotation au niveau d'un support de mât (14) fixé à la structure porteuse, et le support de mât (14) comprenant une cuve (42) s'engageant dans la structure porteuse (17), équipée en tant que palier pivotant (48) pour la tête rotative (19) et les unités fonctionnelles formant le dispositif de support (18) comprenant chacune un pied de support (20, 22, 22') supporté de manière pivotante et/ou de manière télescopique dans un palier fixé à la structure porteuse (52, 54), **caractérisée en ce que** la cuve (42) s'engage avec une paroi de cuve (56) de section transversale se rétrécissant depuis le haut vers le bas en forme de tronc de cône ou de tronc de pyramide dans la structure porteuse (17) et étant insérée rigidement dans celle-ci.

2. Pompe à béton selon la revendication 1, **caractérisée en ce que** la cuve (42) présente une ouverture de passage vertical (43) pour le passage d'un conduit de transport de béton.

3. Pompe à béton selon la revendication 1 ou 2, **caractérisée en ce que** des bras de palier (50) appartenant à la structure porteuse (17) sont soudés à la cuve (42), lesquels présentent des logements de palier (52, 54) disposés à distance de la paroi de la cuve (56), au niveau desquels à chaque fois l'un des pieds de support (20, 22, 22') est supporté de manière à pouvoir pivoter autour d'un axe vertical.

4. Pompe à béton selon l'une quelconque des revendications 1 à 3, **caractérisée en ce que** la paroi de la cuve (56) forme un tronc de cône ou un tronc de pyramide avec une surface tronquée (58) ouverte vers le bas, montant obliquement dans la direction de conduite (F) de la pompe à béton.

5. Pompe à béton selon la revendication 4, **caractérisée en ce que** la cuve (42) est supportée avec sa surface tronquée oblique (58) sur un cadre de support (60) de la structure porteuse (17) montant obliquement dans la direction de conduite.

6. Pompe à béton selon l'une quelconque des revendications 1 à 5, **caractérisée en ce que** les pieds de support avant (20) sont constitués de plusieurs organes télescopiques (40) qui peuvent être télescopés au moyen d'un cylindre de télescopage (62) à commande hydraulique disposé sur le côté tourné vers la paroi de cuve conique (56) à l'extérieur des pieds de support (20).
